# EUROPEAN PATENT SPECIFICATION

(11) **EP 3 470 216 B1**
(45) Date of publication and mention of the grant of the patent: **13.04.2022**
(21) Application number: 17810214.1
(22) Date of filing: 02.06.2017
(51) Int. Cl.: B30B 11/16, B30B 15/32, B01J 2/22, A61J 3/10

(54) **PRESSURE GRANULATION MACHINE FOR MOLDED PRODUCTS**
DRUCKGRANULIERMASCHINE FÜR FORMPRODUKTE
MACHINE DE GRANULATION SOUS PRESSION POUR PRODUITS MOULÉS

(30) Priority: 08.06.2016 JP 2016114181
(43) Date of publication of application: 17.04.2019
(73) Proprietor: Sintokogio, Ltd., Nagoya-shi, Aichi 450-6424 (JP)
(72) Inventor: ODAGI, Katsuaki, Toyokawa-shi Aichi 442-8505 (JP)
(74) Representative: Beyer, Andreas
(86) International application number: PCT/JP2017/020567
(87) International publication number: WO 2017/213036

(56) References cited:
- EP-A2- 0 423 701
- WO-A1-2008/059818
- JP-A- H06 142 487
- JP-A- 2009 262 160
- US-A- 1 724 827
- US-A1- 2010 301 519
- US-B1- 6 660 197

## Description

### Technical Field

The present invention relates to a pressure granulation machine for molded products. Specifically, it relates to a pressure granulation machine by which molded products can be taken out from the machine without using a mechanism for extruding the products.

### Background Art

Conventionally, a briquetting machine has been known as a pressure granulation machine by using rolls that granulate powdery material by compressing it. By the briquetting machine, powdery material is fed from above to a gap between a pair of pressing rolls that consist of a fixed rotating roll, and a movable rotating roll that is pressed by an oil cylinder. The briquetting machine granulates the powdery material by compressing it by means of the pair of pressing rolls to produce briquettes, i.e., granular products.

The products that are granulated by a briquetting machine are connected to a sheet, i.e., to form burrs. Thus removing the burrs from the products must be carried out. Especially, if the products are small, such as 3 mm or less, removing the burrs becomes difficult such that well-shaped products cannot be obtained. This is a problem.

To solve the problem, in a process for granulating powdery material to produce tablets by pressing it by means of a pressure granulation machine by using a pair of rolls, which inwardly rotate, a plurality of concavities for granulating tablets are formed on the outer surface of one of the pair of rollers. The roll on which the concavities are formed is rotated so that the speed at the surface is slower than that of the roll on which no concavity is formed. As a result, a shear force is applied to the outer edges of the tablets so that burrs are prevented from being generated. Such a process has been proposed (see Patent Literature 1).

However, if a mechanism for extruding the products is used for taking out the products from the concavities, the powdery material that has adhered to interstices of the members of the mechanism often interrupts the operation of it. Further, the number of members increases, to thereby increase the cost of the machine. Further, the lack of cleanliness gets worse. These are problems.

The present invention aims to provide a pressure granulation machine that is not equipped with a mechanism for extruding products, that has a simple structure to reclaim products, and that has a high degree of cleanliness.

Patent Literature 2 discloses a pressure granulation machine according to the preamble of claim 1, namely an apparatus for forming a powdery material into tablets, comprising an ejecting means for pushing out tablets located within cavities of a pressing roll. The ejecting means includes pistons disposed in the cavities of the roll and a pushing member for pushing the pistons to the peripheral surface of the roll.

Patent Literature 3 discloses a vacuum-rotary cake machine comprising a hollow suction cylinder for withdrawing dough pieces from recesses of a pressing roll.

Patent Literature 4 discloses a method for producing elongated drug formulations, comprising a step of releasing the drug formulations from pocket cavities of a pressing roller by means of vacuum suction.

Patent Literature 5 discloses a granulating and coating apparatus comprising a blower for sucking a product that has completed treatment from the interior of a processing cylinder to the outside.

### Prior-art Publication

### Patent Literature

[Patent Literature 1]: JP 4380784 B2
[Patent Literature 2]: US 2010/0301519 A1
[Patent Literature 3]: US 1 724 827 A
[Patent Literature 4]: US 6 660 197 B1
[Patent Literature 5]: EP 0 423 701 A2

### Disclosure of Invention

To achieve the above-mentioned objectives, a pressure granulation machine for molded products according to appended claim 1 is provided. Preferred embodiments are defined in the appended dependent claims.

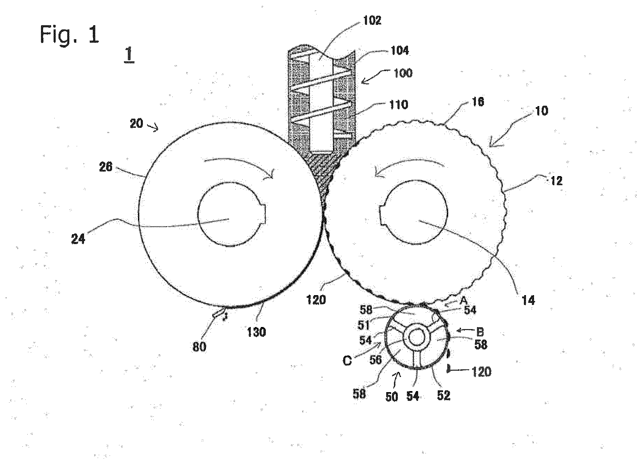

As in Fig. 1, for example, a pressure granulation machine for molded products of a first aspect of the present invention is a pressure granulation machine 1 that granulates material 110 by compressing it by means of a pair of pressing rolls 10, 20, which rotate to manufacture molded products 120. It comprises a first pressing roll 10 of the pair of the pressing rolls 10, 20, on an outer surface 16 of which molding concavities 12 are formed. It also comprises a second pressing roll 20 of the pair of the pressing rolls 10, 20, which rotates faster than the first pressing roll 10 does. It also comprises a first suctioning device 50 that suctions the molded products 120 that have been formed by granulating the material by pressing it in the molding concavities 12 to rip off the molded products 120 from the molding concavities 12.

By this configuration, since the second pressing roll rotates faster than the first pressing roll does, any material that does not fill the concavities for molding, i.e., to form burrs, adheres to the outer surface of the second pressing roll. Thus products without burrs are manufactured in the concavities for molding of the first pressing roll by granulating the material by compressing it. Since the products that have been molded in the concavities for molding of the first pressing roll by granulating the material by compressing it are suctioned by the first suctioning device to be ripped off the concavities for molding, no mechanism for extruding the products is needed. Thus the pressure granulation machine that can reclaim the products by a simple structure, that has no interstices where powdery material adheres, and that has a high degree of cleanliness, can be provided.

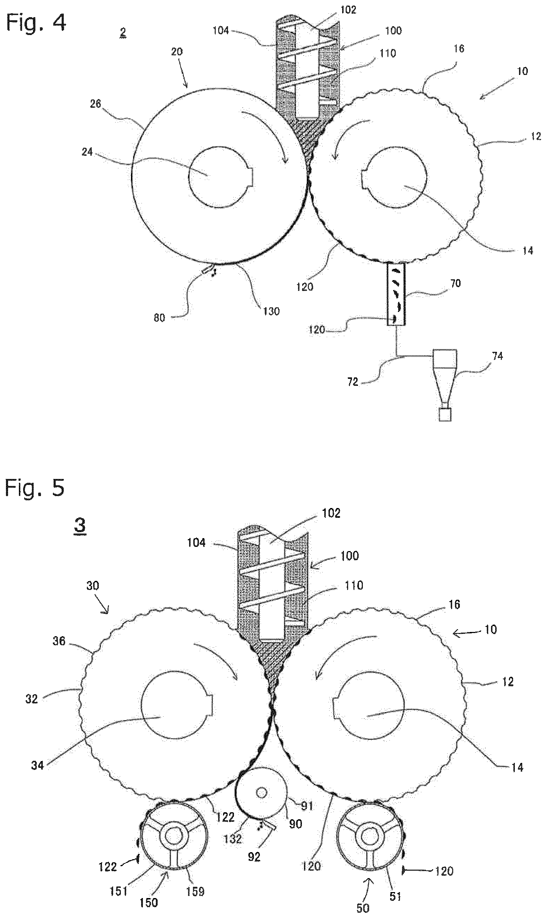

By the pressure granulation machine for molded products of a second aspect of the present invention, as in Fig. 5, for example, in the pressure granulation machine 3 for molded products of the first aspect second molding concavities 32 are formed on an outer surface 36 of the second pressing roll 30. The pressure granulation machine 3 further comprises a second suctioning device 150 that suctions molded products 122 that have been formed by granulating the material by pressing it in the second molding concavities 32 to rip off the molded products 122 from the second molding concavities 32. By this configuration, products are also manufactured by granulating the powdery material by compressing it at the second concavities for molding on the outer surface of the second pressing roll. They are suctioned by the second suctioning device to be ripped off. Thus more products can be manufactured by granulating the material by pressing it. Further, no mechanism for extruding the products is needed. Thus the pressure granulation machine that can reclaim the products by a simple structure, that has no interstices where powdery material adheres, and that has a high degree of cleanliness, can be provided.

By the pressure granulation machine for molded products of a third aspect of the present invention, as in Fig. 1, for example, the pressure granulation machine 1 for molded products of the first aspect further comprises a scraper 80 that scrapes off material 130 that adheres to an outer surface 26 of the second pressing roll 20. By this configuration, since the scraper scrapes off the material that adheres to the outer surface of the second pressing roll, the outer surface of the second pressing roll can be easily cleaned.

By the pressure granulation machine for molded products of a fourth aspect of the present invention, as in Fig. 5, for example, the pressure granulation machine 3 for molded products of the second aspect further comprises a secondary roll 90 that contacts the outer surface 36 of the second pressing roll 30 to rotate and that rolls up material 132 that adheres to the outer surface 36 of the second pressing roll 30. It also comprises a scraper 92 that scrapes off the material 132 that adheres to an outer surface 91 of the secondary roll 90. By this configuration, since the material that adheres to the outer surface of the second pressing roll, on which the second concavities for molding are formed, is rolled up by means of the secondary roll, and the material that has been rolled up is scraped off by means of the scraper, the outer surface of the second pressing roll is easily cleaned.

By the pressure granulation machine for molded products of a fifth aspect of the present invention, as in Fig. 1, for example, in the pressure granulation machine 1 for molded products of any of the first to fourth aspects the first suctioning device 50 is a first suctioning roll 50 that contacts the outer surface 16 of the first pressing roll 10, wherein the suctioning apertures 59 that are smaller than the molding concavities 12 are formed on an outer surface 51 of the first suctioning roll 50, which rotates, and which rips off the molded products 120 from the molding concavities 12 by suctioning through the suctioning apertures 59. By this configuration, since the pressure granulation machine comprises the first suctioning roll so that the apertures for suctioning that are smaller than the concavities for molding are formed and so that the molded products are ripped off the concavities for molding by suctioning through the apertures for suctioning, the molded products firmly adhere to the first suctioning roll so that the molded products are ripped off by means of a simple structure.

By the pressure granulation machine for molded products of a sixth aspect of the present invention, as in Fig. 5, for example, in the pressure granulation machine 3 for molded products of the second aspect, or the fifth aspect that refers to the second aspect, the second suctioning device 150 is a second suctioning roll 150 that contacts the outer surface 36 of the second pressing roll 30, wherein apertures 159 for suctioning that are smaller than the second molding concavities 32 are formed on an outer surface 151 of the second suctioning roll 150, which rotates, and which rips off the molded products 122 from the second molding concavities 32 by suctioning through the apertures 159 for suctioning. By this configuration, since the pressure granulation machine comprises the second suctioning roll so that the apertures for suctioning that are smaller than the second concavities for molding are formed and so that the molded products are ripped off the second concavities for molding by suctioning through the apertures for suctioning, the molded products firmly adhere to the second suctioning roll so that the molded products are ripped off by means of a simple structure.

By the pressure granulation machine for molded products of a seventh aspect of the present invention, as in Fig. 1, for example, in the pressure granulation machine 1 for molded products of the first aspect, a surface of the first suctioning roll 50 is made of metal, plastic, rubber, or ceramic. By this configuration, since the surface of the first suctioning roll is made of metal, plastic, rubber, or ceramic, the first suctioning roll is durable.

By the pressure granulation machine for molded products of an eighth aspect of the present invention, as in Fig. 1, for example, in the pressure granulation machine 1 for molded products of the fifth or seventh aspect, the outer surface 51 of the first suctioning roll 50, which rotates, has a section A, where the molded products 120 are ripped off the molding concavities 12 by suctioning through the suctioning apertures 59, and a section B, where the molded products 120 are released by stopping suctioning through the suctioning apertures 59. At least in a position where the outer surface 51 contacts the first pressing roll 10 the molded products 120 are ripped off the molding concavities 12 by suctioning through the suctioning apertures 59. By this configuration, since the molded products are ripped off the concavities for molding, and are released at a predetermined position, by means of the first suctioning roll, reclaiming the molded products is facilitated.

By the pressure granulation machine for molded products of a ninth aspect of the present invention, as in Fig. 1, for example, in the pressure granulation machine 1 for molded products of the eighth aspect, the outer surface 51 of the first suctioning roll 50, which rotates, has a section C, where air is ejected through the suctioning apertures 59. At the section C fine powder that has plugged the suctioning apertures 59 is discharged. By this configuration, since the first suctioning roll ejects air through the apertures for suctioning to discharge any fine powder that has plugged the apertures for suctioning, the first suctioning roll comes to have a high degree of cleanliness.

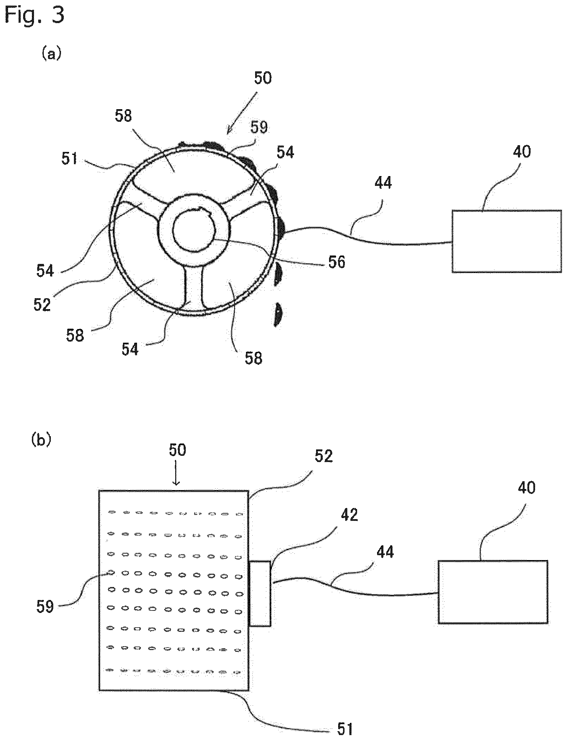

By the pressure granulation machine for molded products of a tenth aspect of the present invention, as in Figs. 1 and 3, for example, in the pressure granulation machine 1 for molded products of the eighth or ninth aspect, the first suctioning roll 50 has an outer ring 52 that is a cylinder that has the outer surface 51, wherein an inside of the outer ring 52 is divided into three spaces 58 in a normal section of an axis of the outer ring 52, wherein the three spaces 58 are connected to the suctioning apertures 59 and rotate together with the outer surface 51. The pressure granulation machine 1 for molded products also comprises a vacuum generator 40. It also comprises a switching device 42 that switches to connect the vacuum generator 40 to the space 58 that is connected to the suctioning apertures 59 that are located at the section to rip off the molded products 120 from the molding concavities 12 by suctioning through the suctioning apertures 59. By this configuration, three spaces are formed inside the outer ring of the first suctioning roll in a normal section of the axis of the first suctioning roll. The three spaces are connected to the apertures for suctioning. They rotate together with the outer surface. Since at least one space is connected to the vacuum generator, the molded products are ripped off the concavities for molding by suctioning through the apertures for suctioning by means of a simple structure.

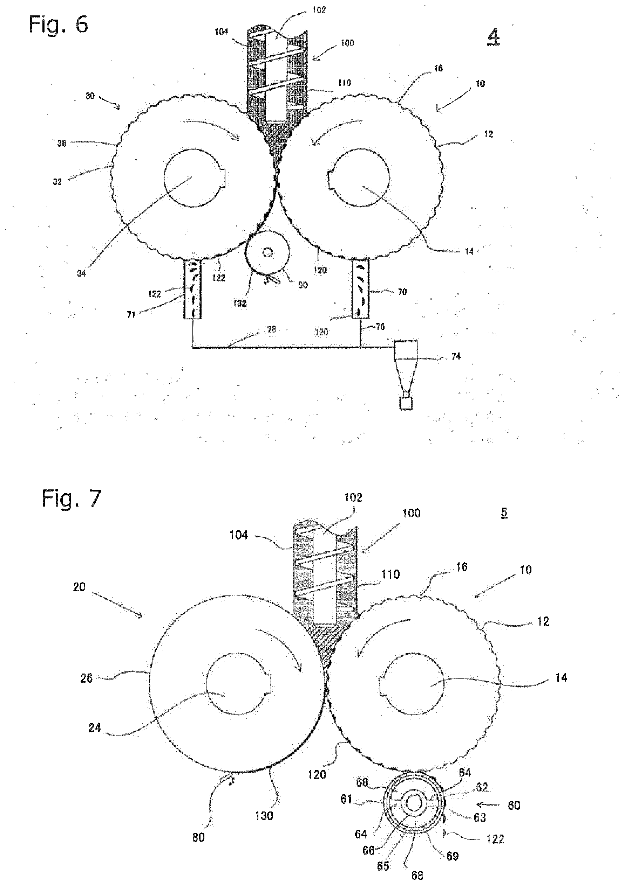

As shown in Fig. 7, for example, in the pressure granulation machine 5 for molded products which does not form part of the present invention, the first suctioning roll 60 has an outer ring 62 that is a cylinder that has the outer surface 61, wherein an inside of the outer ring 62 is divided into two spaces 68 in a normal section of an axis of the outer ring 62, wherein the two spaces 68 are connected to the suctioning apertures 69. The pressure granulation machine 5 for molded products also comprises a vacuum generator 40 that causes the space 68 to have a negative pressure, which space 68 is connected to the suctioning apertures 69 that are located at the position to rip off the molded products 120 from the molding concavities 12 by suctioning through the suctioning apertures 69. By this configuration, two spaces are formed inside the outer ring of the first suctioning roll in a normal section of the axis of the first suctioning roll. The two spaces are connected to the apertures for suctioning. Since at least one space is connected to the vacuum generator, the molded products are ripped off the concavities for molding by suctioning through the apertures for suctioning.

As shown in Fig. 4, for example, in the pressure granulation machine 2 for molded products which does not form part of the present invention, the first suctioning device 70 is a first port 70 for suctioning that opens against the outer surface 16 of the first pressing roll 10 and that suctions to rip off the molded products 120 from the molding concavities 12 by suctioning through the first port 70 for suctioning. By this configuration, the molded products are ripped off the concavities for molding by means of the first port for suctioning. Thus, since no mechanism for extruding the products is needed, a pressure granulation machine wherein the molded products can be reclaimed by a simple structure, wherein no powdery material adheres to the interstices, and wherein there is a high degree of cleanliness, can be provided.

As shown in Fig. 6, for example, in the pressure granulation machine 4 for molded products which does not form part of the present invention, the second suctioning device 71 is a second port 71 for suctioning that opens against the outer surface 36 of the second pressing roll 30 and that suctions to rip off the molded products 122 from the second concavities 32 for forming by suctioning through the second port 71 for suctioning. By this configuration, the molded products are ripped off the concavities for molding by means of the second port for suctioning. Thus, since no mechanism for extruding the products is needed, the pressure granulation machine, wherein the molded products can be reclaimed by a simple structure, wherein no powdery material adheres to the interstices, and wherein there is a high degree of cleanliness, can be provided.

As shown in Figs. 4 and 6, for example, the pressure granulation machine 2, 4 for molded products which does not form part of the present invention also comprises a cyclone-type reclaiming device 74 that separates the molded products 120, 122 that have been suctioned by the first port 70 for suctioning or the second port for suctioning 71 from fine powder that has been suctioned by the first port 70 for suctioning or the second port for suctioning 71. By this configuration, since the molded products and fine powder that have been suctioned by the first port for suctioning or the second port for suctioning can be divided by means of the cyclone-type reclaiming device, only the molded products can be reclaimed.

By the pressure granulation machine for molded products as in Figs. 1 and 4 to 7, for example, in the pressure granulation machines 1 to 5 for molded products - machines 2, 4 and 5 not forming part of the present invention-a diameter D1 of the first pressing roll 10 and a diameter D2 of the second pressing roll 20 are the same and a speed of rotation of the second pressing roll 20 is greater than that of the first pressing roll 10. By this configuration, the pressing rolls that have the same diameters can be used.

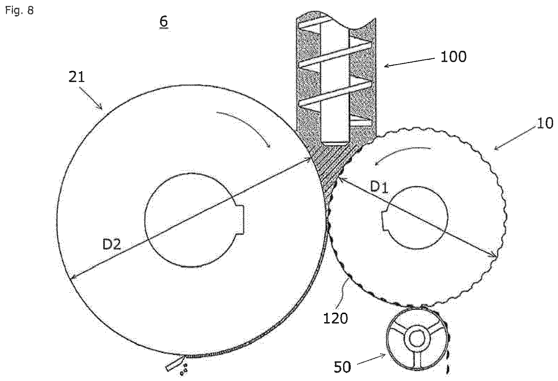

By the pressure granulation machine for molded products as in Fig. 8, for example, in the pressure granulation machines 1 to 5 for molded products - machines 2, 4 and 5 not forming part of the present invention - a diameter D2 of the second pressing roll 21 is greater than a diameter D1 of the first pressing roll 10, and the speeds of rotation of the first pressing roll 10 and the second pressing roll 20 are the same. By this configuration, a driving system that has a complicated structure can be simplified.

By the pressure granulation machine for molded products of the present invention, since the second pressing roll rotates at a faster speed at the outer surface than the first pressing roll does, the material that does not fill the concavities for molding, i.e., the burrs, adheres to the outer surface of the second pressing roll. Thus, products that have no burrs are formed in the concavities for molding of the first pressing roll by granulating the powdery material by compressing it. Further, since the molded products in the concavities for molding of the first pressing roll are suctioned by means of the first suctioning device to be ripped off the concavities for molding, no mechanism for extruding the products is needed. Thus, a pressure granulation machine that can reclaim products by a simple structure, that has no interstices where powdery material adheres, and that has a high degree of cleanliness, can be provided.

The basic Japanese patent application, No. 2016-114181, filed June 8, 2016, is hereby incorporated by reference in its entirety in the present application.

The present invention will become more fully understood from the detailed description given below. However, that description and the specific embodiments are only illustrations of the desired embodiments of the present invention, and so are given only for an explanation. Various possible changes and modifications will be apparent to those of ordinary skill in the art on the basis of the detailed description.

The applicant has no intention to dedicate to the public any disclosed embodiment. Among the disclosed changes and modifications, those which may not literally fall within the scope of the present claims constitute, therefore, under the doctrine of equivalents, a part of the present invention.

The use of the articles "a," "an," and "the" and similar referents in the specification and claims are to be construed to cover both the singular and the plural form of a noun, unless otherwise indicated herein or clearly contradicted by the context. The use of any and all examples, or exemplary language (e.g., "such as") provided herein is intended merely to better illuminate the invention, and so does not limit the scope of the invention, unless otherwise stated.

### Brief Description of Drawings

[Fig. 1] Fig. 1 is a schematic drawing of the first embodiment of the pressure granulation machine. The first pressing roll and the first suctioning roll, and the second pressing roll and the scraper, are shown.
[Fig. 2] Fig. 2 is a schematic drawing of the outer surface and the concavities for molding of the pressing roll.
[Fig. 3] Fig. 3 is a schematic drawing of the suctioning roll and the vacuum generator that cause the suctioning roll to have a negative pressure.
[Fig. 4] Fig. 4 is a schematic drawing of an example related to but not forming part of the invention. The first pressing roll and the first port for suctioning, and the second pressing roll and the scraper, are shown.
[Fig. 5] Fig. 5 is a schematic drawing of the second embodiment of the pressure granulation machine. The first pressing roll and the first suctioning roll, and the second pressing roll, the second suctioning roll, and the secondary roll, are shown.
[Fig. 6] Fig. 6 is a schematic drawing of an example related to but not forming part of the invention. The first pressing roll and the first suctioning roll, and the second pressing roll, the second port for suctioning, and the secondary roll, are shown.
[Fig. 7] Fig. 7 is a schematic drawing of an example related to but not forming part of the invention. The first pressing roll and the first suctioning roll, and the second pressing roll and the scraper, are shown. An inner ring is provided to form two spaces inside the outer ring of the first suctioning roll in a normal section of the axis of the first suctioning roll.
[Fig. 8] Fig. 8 is a schematic drawing of the third embodiment of the pressure granulation machine. The pressure granulation machine is shown wherein the diameter of the second pressing roll is greater than that of the first pressing roll.

### Mode for Carrying Out the Invention

Below, a pressure granulation machine for molded products as an embodiment of the present invention is discussed with reference to drawings. In the drawings, the same numeral or symbol is used for the elements that correspond to, or are similar to, each other. Thus duplicate descriptions are omitted.

Fig. 1 is a schematic drawing of the pressure granulation machine 1, which is a first embodiment of the present invention. The pressure granulation machine 1 granulates the powdery material 110 by compressing it to molded products 120 that have a predetermined shape. It comprises a first pressing roll 10 that is a cylinder that rotates about a horizontal shaft 14. It also comprises a second pressing roll 20 that is a cylinder that rotates about a horizontal shaft 24. The first pressing roll 10 and the second pressing roll 20 are parallel to each other so that the outer surface 16 contacts the outer surface 26. Here, the phrase "so that the outer surface 16 contacts the outer surface 26" means that the outer surfaces 16 and 26 actually contact each other or that a small amount of the powdery material 110 is sandwiched between them. That phrase may be replaced to say that the outer surface 16 contacts the outer surface 26. The first pressing roll 10 and the second pressing roll 20 rotate in directions such that the upper parts come close to each (also called "inwardly"), as shown by the arrows. The second pressing roll 20 rotates at a speed such that the speed at its outer surface is faster than that of the first pressing roll 10. Above the position where the first pressing roll 10 contacts the second pressing roll 20 a screw feeder 100 is provided as a device for feeding the material that feeds the material 110 to a gap between the first pressing roll 10 and the second pressing roll 20. The screw feeder 100 has a screw 102 that has a helical blade in a cylindrical case 104. The screw 102 rotates about its axis to feed the material 110 downwardly, i.e., to the gap between the first pressing roll 10 and the second pressing roll 20. The screw feeder 100 may be any known device. The device for feeding the material is not limited to one such as the screw feeder 100, but may be any other device such as a device for feeding the material 110 by applying pressure on it other than by directly pressing it or a device for feeding the material 110 by directly pressing it.

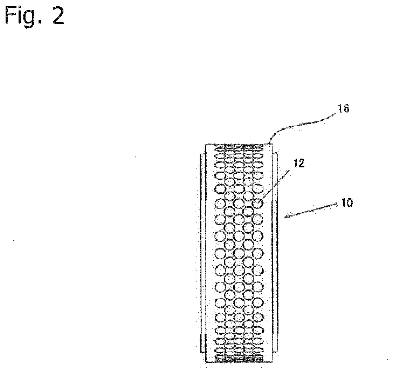

As in Fig. 2, molding concavities 12 are formed on the outer surface 16 of the first pressing roll 10. The molding concavities 12 are spaces which the material 110 fill. The material 110 is granulated by being compressed by pressure applied by the second pressing roll 20. On the outer surface 16, many molding concavities 12 are formed to efficiently manufacture the molded products 120. The number and the arrangement of the molding concavities 12 are arbitrary. The outer surface 26 of the second pressing roll 20 is flat. The second pressing roll 20 rotates at a speed that is faster than that of the first pressing roll 10. The first pressing roll 10 and the second pressing roll 20 are both made of a material that is selected from metal, plastic, rubber, or ceramic, based on the type of material 110 to be granulated by compression. For example, if great pressure is required to granulate the material by compressing it, metal, especially stainless steel, is preferable.

As in Fig. 1, the material 110 that has been fed to the gap between the first pressing roll 10 and the second pressing roll 20 partially fill the molding concavities 12 to be granulated by being compressed by pressure applied by the second pressing roll 20. In contrast, the material 110 that has not filled the molding concavities 12 is pressed between the outer surface 16 of the first pressing roll 10, but not the molding concavities 12, and the outer surface 26 of the second pressing roll 20, to become sheet-like material 130.

A scraper 80 is provided so as to contact the lower part of the second pressing roll 20. The lower part of the second pressing roll 20 may be downstream of the position for pressing the material 110 with the first pressing roll 10. It is preferable that it not be beyond the lowest position. Here, the wording "so as to contact" means that the scraper 80 is so close to the lower part of the second pressing roll 20 that it can scrape off the sheet-like material 130 that adheres to the outer surface 26 of the second pressing roll 20. The scraper 80 is a member that is long in the axial direction of the second pressing roll 20 (the direction that is perpendicular to the sheet of Fig. 1). It has a sharp edge or a round edge. The scraper 80 is located so as to scrape off the material 130 that adheres to the outer surface 26.

A first suctioning roll 50, which is a first suctioning device, is provided so as to contact the lower part of the first pressing roll 10. The lower part of the first pressing roll 10 is downstream of the position where the material 110 is granulated by compression with the second pressing roll 20. The material 110 has been fed from the screw feeder 100 and has filled the molding concavities 12 of the first pressing roll 10. Here, the wording "so as to contact" means that the first suctioning roll 50 is so close to the first pressing roll 10 so as to be able to suction the molded products 120 in the molding concavities 12 by suctioning through the suctioning apertures 59 of the first suctioning roll. That wording may be replaced so as to say that the first suctioning roll 50 contacts the first pressing roll 10.

The first suctioning roll 50 is enlarged in Fig. 3. Fig. 3(a) shows a cross-section of the first suctioning roll 50, a vacuum generator 40 for causing spaces 58 inside the first suctioning roll 50 to have a negative pressure, and so on. Fig. 3(b) shows the outer surface 51 of the first suctioning roll 50, the vacuum generator 40, a switching device 42 for switching the space 58 so that it is at a negative pressure, and so on. The first suctioning roll 50 has a rotary shaft 56 that is parallel to the rotary shaft 14 of the first pressing roll 10. It also has a cylindrical outer ring 52 and parting plates 54 that link the rotary shaft 56 with the outer ring 52. The parting plates 54 divide the space 58 in the outer ring 52 into three parts. Both ends of the cylindrical first suctioning roll 50 are sealed with covers, which are not shown. The parting plates 54 and the covers at the ends divide the space 58 in the outer ring 52, i.e., the space 58 that is surrounded by the outer ring 52, the covers, and the rotary shaft 56, into three spaces 58, which are formed as sectors in a normal section of the axis. Incidentally, the space 58 in the outer ring 52 is not necessarily divided into three spaces that have equal areas (or the same central angle). Suctioning apertures 59 are formed to pass through the outer ring 52 of the first suctioning roll 50. That is, the suctioning apertures 59 open on the outer surface 51. The suctioning apertures 59 are holes that are smaller in diameter than the molding concavities 12 of the first pressing roll 10, i.e., the molded products 120. Many of them are formed. The number and the arrangement of them are not limited. They are formed so that the molded products 120 in the molding concavities 12 of the first pressing roll 10 can be ripped off, as discussed below. On the parts of the outer surface 51 where the parting plates 54 are connected to the outer ring 52, the suctioning apertures 59 are preferably formed from the spaces 58 that are divided by the parting plates 54 so that the suctioning apertures 59 are uniformly formed on the outer surface 51. The first suctioning roll 50 is made of metal, plastic, rubber, or ceramic. It is not necessarily made of the same material as the first pressing roll 10.

The space 58 in the outer ring 52 of the first suctioning roll 50 is caused to have a negative pressure so as to suction through the suctioning apertures 59 on the outer surface 51. The first suctioning roll 50 is connected to the switching device 42. The vacuum generator 40 is connected to the switching device 42 through vacuum piping 44. The switching device 42 connects the vacuum piping 44 to the spaces 58 that are divided into three spaces through a branch pipe. Shut-off valves are provided to vacuum tubes (not shown) that are located downstream of the branch pipe. The space 58 at the section A, which is close to the first pressing roll 10, is caused to have a negative pressure. According to an alternative which does not form part of the invention, a flow path that is connected to the vacuum piping 44 and to the space 58 only at the section A, which is close to the first pressing roll 10, may be provided or any other known configuration may be used to cause the space 58, only at the section A , to have a negative pressure. The switching device 42 may cause the space 58 at the section A, which is close to the first pressing roll 10, and the space 58 at the section C, which is upstream of the section A (the space 58 that comes to the position that is close to the first pressing roll 10 at the next turn as the first suctioning roll 50 rotates), to have a negative pressure. The space 58 at the section B, which leaves the section A by the rotation of the first suctioning roll 50, is released from the negative pressure so as to stop suctioning through the suctioning apertures 59.

One of the three spaces 58, 58, 58, namely, the one that is at the section C and will come to the section A at the next turn in the rotation of the first suctioning roll 50, which section A is close to the first pressing roll 10, may be pressurized. At the space 58 to be pressurized, a device (not shown) that is like the switching device 42, and a device for pressurizing (not shown), such as a compressor, may be connected by a pressure piping (not shown). The method for pressurizing the space 58 is not limited to the above. The outer surface 51 (the parts of the outer surface 51 that correspond to the molding concavities 12) of the first suctioning roll 50 that rotates moves from the section A to the section C via the section B. Then it moves again to the section A. That is, the parts of the outer surface 51 that correspond to the molding concavities 12 rip off the molded products from the molding concavities 12 at the section A. When they come to the section B, they release the molded products. Thereafter, when they come to the section C, any fine powder that has plugged the suctioning apertures 59 is discharged. Incidentally, the number of the inner spaces 58 of the first suctioning roll 50 may be 2, 3, or 4, or more.

Next, the operation of the pressure granulation machine 1 is discussed. The screw feeder 100 stores the material 110 for the molded products 120. The material 110 is not limited, and may be powder material for tablets, food powder for granular cakes, or metallic or plastic powder material. By the rotation of the screw 102 of the screw feeder 100 the material 110 is fed to the gap between the first pressing roll 10 and the second pressing roll 20.

The material 110 is pressed by the first pressing roll 10 and the second pressing roll 20 to fill the molding concavities 12 on the outer surface 16 of the first pressing roll 10. When the first pressing roll 10 and the second pressing roll 20 inwardly rotate, the material 110 that has filled the molding concavities 12 is pressed by means of the second pressing roll 20, to be granulated by compression, to thereby become the molded products 120. At the same time, the material 110 that has not been used to fill the molding concavities 12 is pressed by means of the outer surface 16 of the first pressing roll 10 (the parts other than the molding concavities 12) and by means of the outer surface 26 of the second pressing roll 20, to thereby become a thin sheet 130. Since the second pressing roll 20 rotates at a speed at the outer surface that is faster than that of the first pressing roll 10, a shear force is generated between the molded products 120 in the molding concavities 12 and the sheet-like material 130. Thus the sheet-like material 130 is separated from the molded products 120. That is, no burrs attach to the molded products 120. The sheet-like material 130 adheres to the second pressing roll 20 that rotates at a higher speed at the outer surface.

As the first pressing roll 10 rotates, the molded products 120 in the molding concavities 12 move to a position that is close to the first suctioning roll 50. In the first suctioning roll 50 air is suctioned through the suctioning apertures 59. Thus, as in Fig. 1, the molded products 120 in the molding concavities 12 are suctioned, are ripped off the molding concavities 12, and adhere to the outer surface 51 of the first suctioning roll 50. Since the molded products 120 are suctioned to be ripped off the molding concavities 12, no mechanism for extruding the molded products 120 is needed for the first pressing roll 10. Thus the structure of the first pressing roll 10 can be simplified and the cost for it can be reduced. Further, there is no moving part, such as a mechanism for extruding the products. Thus no powdery material, such as the material 110, adheres to the interstices, so that maintenance is facilitated. Both the outer surface 16 of the first pressing roll 10 and the outer surface 51 of the first suctioning roll 50 are cylindrical. Since the molded products 120 start to be suctioned at their ends by the suctioning apertures 59 of the first suctioning roll 50, the molded products 120 start to be ripped off at their ends from the molding concavities 12. Thus, it is easier to rip the molded products 120 off than to rip at one time the entire products off the molding concavities 12.

The molded products 120 that adhere to the outer surface 51 of the first suctioning roll 50 rotate together with the first suctioning roll 50. When the first suctioning roll 50 rotates, the space 58 where the suctioning apertures 59 suction the molded products 120 moves to leave the section A, which is close to the first pressing roll 10, and moves to the section B. Then that space 58 is no longer at a negative pressure, so that the suctioning apertures 59 stop suctioning. When the suctioning apertures 59 stop suctioning, the molded products 120 no longer adhere to the outer surface 51 of the first suctioning roll 50, and freely drop. Thus, the molded products 120 can be reclaimed at a predetermined position.

When the first suctioning roll 50 further rotates, so that that space 58 moves to the section C, the space 58, where the suctioning apertures 59 have suctioned the molded products 120, may be pressurized. If the space 58 is pressurized, compressed air is ejected through the suctioning apertures 59. Thus fine powder, such as any powder or dust that has been generated from the material 110, that has plugged the suctioning apertures 59, is discharged. Cleaning the suctioning apertures 59 is no longer required.

When the second pressing roll 20 rotates, the sheet-like material 130 that adheres to the outer surface 26 of the second pressing roll 20 rotates, to be scraped from the second pressing roll 20 by means of the scraper 80. Thus, the material 130 that has not been used for the molded products 120 can be reclaimed at a predetermined position. The reclaimed material 130 may again be sent to the screw feeder 100.

As discussed above, by the pressure granulation machine 1, since the second pressing roll 20 rotates at a speed at the outer surface that is faster than that of the first pressing roll 10, the material 130 that has not filled the molding concavities 12, i.e., to form burrs, adheres to the outer surface 26 of the second pressing roll 20. The molded products 120, to which no burrs attach, can be manufactured in the molding concavities 12 of the first pressing roll 10 by granulating by compression. The molded products 120, which have been manufactured in the molding concavities 12 of the first pressing roll 10 by granulating by compression, are suctioned by the first suctioning roll 50 to be ripped off the molding concavities 12. Thus, since no mechanism for extruding the products is needed, the molded products 120 can be reclaimed by a simple structure, no powdery material adheres to the interstices, and there is a high degree of cleanliness. Further, if air is ejected through the suctioning apertures 59 in the first suctioning roll 50 at the section C, any fine powder that has plugged the suctioning apertures 59 can be discharged, so that the first suctioning roll 50 has a high degree of cleanliness.

Next, with reference to Fig. 4, the pressure granulation machine 2, which is an example related to but not forming part of the present invention, is discussed. Fig. 4 is a schematic drawing of it. The pressure granulation machine 2 comprises a first port 70 for suctioning, which is the first suctioning device, instead of the first suctioning roll 50. The screw feeder 100, the first pressing roll 10, the second pressing roll 20, and the scraper 80, are the same as those of the pressure granulation machine 1.

The first port 70 for suctioning is a nozzle that has, for example, a rectangular cross-section. It is located so that its opening faces the outer surface 16 of the first pressing roll 10. It is also located so close to the first pressing roll 10 that the molded products 120 in the molding concavities 12 of the first pressing roll 10 can be suctioned by suctioning through the first port 70 for suctioning. It is connected to a vacuum generator (not shown), such as a vacuum tank, through a suction piping 72. On the suction piping 72 a cyclone-type reclaiming device 74 is provided. The cyclone-type reclaiming device 74 separates the molded products 120, which are suctioned, from the air and from the fine powder, to reclaim the molded products 120. Since the configuration of the cyclone-type reclaiming device 74 is publicly known, its detailed description is omitted.

By the pressure granulation machine 2, which does not form part of the present invention, like by the pressure granulation machine 1, since the second pressing roll 20 rotates at a speed at the outer surface that is faster than that of the first pressing roll 10, the material 130 that has not fill the molding concavities 12, i.e., to form burrs, adheres to the outer surface 26 of the second pressing roll 20. The molded products 120, to which no burrs attach, can be manufactured in the molding concavities 12 of the first pressing roll 10 by granulating by compression. The molded products 120, which have been manufactured in the molding concavities 12 of the first pressing roll 10 by granulating by compression, are suctioned by the first port 70 for suctioning to be ripped off the molding concavities 12. Since no mechanism for extruding the products is needed, the molded products 120 can be reclaimed by a simple structure, no powdery material adheres to the interstices, and there is a high degree of cleanliness. Further, the molded products 120 can be separated from the fine powder by means of the cyclone-type reclaiming device 74 to be reclaimed. Since there is no moving part in either the first port 70 for suctioning or the cyclone-type reclaiming device 74, maintenance is facilitated and there is a high degree of cleanliness.

Next, with reference to Fig. 5, the pressure granulation machine 3, which is a second embodiment of the present invention, is discussed. Fig. 5 is a schematic drawing of the pressure granulation machine 3. The pressure granulation machine 3 is the same as the pressure granulation machine 1, except for the following points. They are that the molding concavities 32 are formed on the outer surface 36 of the second pressing roll 30, that a second suctioning roll 150, which is the second suctioning device, is provided so as to contact the lower part of the second pressing roll 30, and that a secondary roll 90 is provided between the position where the second pressing roll 30 contacts the outer surface 16 of the first pressing roll 10 and the position where it contacts the second suctioning roll 150. The wording "so as to contact" has the same meaning as it does in reference to the pressure granulation machine 1. The screw feeder 100, the first pressing roll 10, and the first suctioning roll 50 are the same as those of the pressure granulation machine 1.

The second pressing roll 30 is cylindrical. It rotates about a horizontal rotary shaft 34. The molding concavities 32 are formed on the outer surface 36 of it. The molding concavities 32 are the same as the molding concavities 12 that are formed on the outer surface 16 of the first pressing roll 10. Incidentally, the size, number, and arrangement of the molding concavities 32 may be different from those of the molding concavities 12. The second pressing roll 30 is made of metal, plastic, rubber, or ceramic, based on the material 122 that is to be granulated by compression. It may be made of the same material as the first pressing roll 10, or different material.

The secondary roll 90 is cylindrical. It inwardly rotates about an axis that is parallel to the second pressing roll 30. It rotates at a speed at the outer surface that is faster than that of the outer surface 36 of the second pressing roll 30. The outer surface of it is flat. It is located so as to contact the outer surface 36 of the second pressing roll 30. Here, the wording "so as to contact" means that the secondary roll 90 contacts or presses the sheet-like material 132 that adheres to the outer surface 36 of the second pressing roll 30. That wording may be replaced by "contact." A scraper 92 is provided so as to contact the outer surface of the secondary roll 90 downstream of the position where the secondary roll 90 contacts the second pressing roll 30. Here, "downstream of the position where the secondary roll 90 contacts the second pressing roll 30" may be any position downstream of the position where the secondary roll 90 contacts the second pressing roll 30, but preferably not beyond the lowest point. The scraper 92 is a member that is long in the axial direction of the secondary roll 90 and has a sharp edge or a round edge. It is located so as to scrape off the material 132 that adheres to the outer surface 91 of the secondary roll 90.

The configuration of the second suctioning roll 150 is generally the same as that of the first suctioning roll 50. It may be connected to the vacuum generator 40 (see Fig. 3) that is used for the first suctioning roll 50, or to another vacuum generator (not shown).

In the second pressing roll 30 of the pressure granulation machine 3, the material 110 fills the molding concavities 32 and the sheet-like material 132 adheres to the outer surface 36 of the second pressing roll 30. The material 110 that has filled the molding concavities 32 is pressed by the first pressing roll 10 and is granulated by compression to become the molded products 122. Incidentally, like in the pressure granulation machine 1, the material 110 that has filled the molding concavities 12 of the first pressing roll 10 is pressed by the second pressing roll 30 to become the molded products 120. The material 132 that adheres to the outer surface 36 contacts the secondary roll 90. Since the secondary roll 90 rotates at a speed at the outer surface that is faster than that of the second pressing roll 30, a shear force is generated between the sheet-like material 132 and the molded products 122 in the molding concavities 32 of the second pressing roll 30. Thus, the sheet-like material 132 is separated from the molded products 122, which have been granulated by compression in the molding concavities 32. That is, no burrs are attached to the molded products 122. The sheet-like material 132 adheres to the outer surface 91 of the secondary roll 90 that rotates at a faster speed at the outer surface. The material 132 that adheres to the secondary roll 90 is scraped off the outer surface 91 by means of the scraper 92, and is reclaimed. The reclaimed material 132 may be sent back to the screw feeder 100. Incidentally, the sheet-like material 132 adheres to the outer surface 36 of the second pressing roll 30 by pressure that is caused by having the first pressing roll 10 contact the second pressing roll 30. Thus, if the pressure that is applied to the second pressing roll 30 by the secondary roll 90 is too low, the sheet-like material 132 may not adhere to the secondary roll 90. Therefore, the pressure that is applied to the material 132 on the second pressing roll 30 by the secondary roll 90 is preferably equal to, or slightly greater than, the pressure that is generated between the first pressing roll 10 and the second pressing roll 30. However, if too high a pressure were to be applied to the material 132, the density of the material 132 would unfavorably change, to cause differences in its properties.

Like the molded products 120, which have been granulated by compression in the molding concavities 12 of the first pressing roll 10, the molded products 122, which have been granulated by compression in the molding concavities 32 of the second pressing roll 30, are suctioned by the second suctioning roll 150, to be reclaimed. That is, the apertures 159 for suctioning open on the outer surface 151 so that the molded products 122 in the molding concavities 32 are suctioned at the position where the second suctioning roll 150 contacts the second pressing roll 30. When the second suctioning roll 150 rotates to stop suctioning through the apertures 159 for suctioning, the molded products 122 are released, to be reclaimed at a predetermined position. Incidentally, the second suctioning roll 150a preferably has a section where air is ejected through the apertures for suctioning.

By the pressure granulation machine 3, like by the pressure granulation machine 1, the molded products 120, which have been granulated by compression in the molding concavities 12 of the first pressing roll 10, are suctioned by the first suctioning roll 50 to be ripped off the molding concavities 12. Thus, since no mechanism for extruding the products is needed, the molded products 120 can be reclaimed by a simple structure, no powdery material adheres to the interstices, and there is a high degree of cleanliness. Further, if air is ejected through the suctioning apertures 59 in the first suctioning roll 50 at the section C, any fine powder that has plugged the suctioning apertures 59 is discharged. Thus, the first suctioning roll 50 has a high degree of cleanliness. Since the second pressing roll 30 rotates at a speed at the outer surface that is faster than that of the first pressing roll 10, the material 132 that has not filled the molding concavities 12 adheres to the outer surface 36 of the second pressing roll 30. It adheres to the outer surface 91 of the secondary roll 90 that rotates at a speed at the outer surface that is faster than that of the second pressing roll 30. Thus, no burrs are attached to the molded products 122, which have been granulated by compression in the molding concavities 32 of the second pressing roll 30. The molded products 122 are suctioned by the second suctioning roll 150 to be ripped off the molding concavities 32. Thus, since no mechanism for extruding the products is needed, the molded products 122 can be reclaimed by a simple structure, no powdery material adheres to the interstices, and there is a high degree of cleanliness. Further, since the concavities 12, 32 for molding are formed on both the outer surface 16 of the first pressing roll 10 and the outer surface 36 of the second pressing roll 30, the molded products 120, 122 are efficiently granulated by compression.

Next, with reference to Fig. 6, the pressure granulation machine 4, which is an example related to but not forming part of the present invention, is discussed. Fig. 6 is a schematic drawing of the pressure granulation machine 4. The pressure granulation machine 4 is the same as the pressure granulation machine 2, which does not form part of the present invention either, except for the following points. They are that the molding concavities 32 are formed on the outer surface 36 of the second pressing roll 30, that a second port 71 for suctioning, which is the second suctioning device, is provided to be close to, and to face, the second pressing roll 30, and that a secondary roll 90 is provided between the position where the second pressing roll 30 contacts the outer surface 36 of the first pressing roll 10 and the position where the second port 71 for suctioning is close to the second pressing roll 30. The screw feeder 100, the first pressing roll 10, and the first port 70 for suctioning, are the same as those of the pressure granulation machine 2.

The second pressing roll 30 is the same as that of the pressure granulation machine 3 (see Fig. 5). The secondary roll 90 and the scraper 92 are also the same as those of the pressure granulation machine 3. That is, the pressure granulation machine 4, which does not form part of the present invention, has the second port 71 for suctioning instead of the second suctioning roll 150 of the pressure granulation machine 3.

The configuration of the second port 71 for suctioning is generally the same as that of the first port 70 for suctioning. The first port 70 for suctioning and the second port 71 for suctioning are connected to the cyclone-type reclaiming device 74 through a suction piping 76 and a suction piping 78, respectively. The suction piping 76 and the suction piping 78 are preferably combined to form a single piping at a branch pipe that is located upstream (the side near the first and second ports 70, 71 for suctioning) of the cyclone-type reclaiming device 74. The cyclone-type reclaiming device 74 is connected to a vacuum generator (not shown), such as a vacuum tank.

By the pressure granulation machine 4, which does not form part of the present invention, the molded products 122, which have been granulated by compression in the molding concavities 32 of the second pressing roll 30, are suctioned by the second port 71 for suctioning. The molded products 122 that have been suctioned by the second port 71 for suctioning are, together with the molded products 120 that have been suctioned by the second port 70 for suctioning, separated from the air and from the fine powder, which have been suctioned, by means of the cyclone-type reclaiming device 74, to be reclaimed. Incidentally, a cyclone-type reclaiming device that is connected to the second port 71 for suctioning may be provided in addition to the cyclone-type reclaiming device 74 that is connected to the first port 70 for suctioning. Further, respective vacuum generators may be provided to the first and second ports 70, 71 for suctioning.

By the pressure granulation machine 4, like by the pressure granulation machine 2, none of which forms part of the present invention, since the second pressing roll 20 rotates at a speed at the outer surface that is faster than that of the first pressing roll 10, the material 132 that has not filled the molding concavities 12, i.e., to form the burrs, adheres to the outer surface 26 of the second pressing roll 20. Thus, the molded products 120, to which no burrs attach, are granulated by compression in the molding concavities 12 of the first pressing roll 10. The molded products 120, which have been granulated by compression in the molding concavities 12 of the first pressing roll 10, are suctioned by the first port 70 for suctioning to be ripped off the molding concavities 12. Thus, since no mechanism for extruding the products is needed, the molded products 120 can be reclaimed by a simple structure, no powdery material adheres to the interstices, and there is a high degree of cleanliness. The molded products 120 can be reclaimed after being separated from the fine powder, which has been suctioned, by means of the cyclone-type reclaiming device 74. Both the first port 70 for suctioning and the cyclone-type reclaiming device 74 have no moving part, so as to facilitate maintenance and to provide a high degree of cleanliness. Since the second pressing roll 30 rotates at a speed at the outer surface that is faster than that of the first pressing roll 10, the material 132 that has not filled the molding concavities 12 adheres to the outer surface 36 of the second pressing roll 30. It adheres to the outer surface 91 of the secondary roll 90 that rotates at a speed at the outer surface that is faster than that of the second pressing roll 30. Thus no burrs attach to the molded products 122, which have been granulated by compression in the molding concavities 32 of the second pressing roll 30. The molded products 122, which have been granulated by compression in the molding concavities 32 of the second pressing roll 30, are suctioned by the second port 71 for suctioning, to be ripped off the molding concavities 32. Thus, since no mechanism for extruding the products is needed, the molded products 122 can be reclaimed by a simple structure, no powdery material adheres to the interstices, and there is a high degree of cleanliness. Further, since the concavities 12, 32 for molding are formed on both the outer surface 16 of the first pressing roll 10 and the outer surface 36 of the second pressing roll 30, the molded products 120, 122 are efficiently granulated by compression.

Next, with reference to Fig. 7, the pressure granulation machine 5, which is an example related to but not forming part of the present invention, is discussed. Fig. 7 is a schematic drawing of the pressure granulation machine 5. The pressure granulation machine 5 is the same as the pressure granulation machine 1 except that the configuration of the first suctioning roll 60 differs from that of the first suctioning roll 50. The first suctioning roll 60 has a support shaft 66 that is parallel to the rotary shaft 14 of the first pressing roll 10. It also has a cylindrical outer ring 62. It also has a cylindrical inner ring 63 that is inscribed in the outer ring 62. It also has parting plates 64 that link the support shaft 66 with the inner ring 63, which parting plates divide the space 68 within the inner ring 63 into two spaces. Both ends of the inner ring 63 of the first suctioning roll 60 are sealed by cover plates (not shown). The parting plates 64 divide the space 68 within the inner ring 63, i.e., the space that is surrounded by the inner ring 63, the cover plates at both ends, and the support shaft 66, into two spaces 68 that are formed as sectors on a cross-section of the inner ring 63. Incidentally, the two spaces 68, 68 in the inner ring 63 are not necessarily equal to each other in area (or in the degree of the central angle). In the pressure granulation machine 5 as in Fig. 7, the first suctioning roll 60 has two horizontal parting plates 64. However, the parting plates 64 need not be horizontal, and the first suctioning roll 60 has three or more parting plates 64. In the outer ring 62 the suctioning apertures 69 are formed to pass through the outer ring 62. Namely, the suctioning apertures 69 open on the outer surface 61. In the inner ring 63 holes 65 for connection are formed that pass through the inner ring 63 and connect the spaces 68 to the suctioning apertures 69 of the outer ring 62. The holes 65 for connection are not necessarily formed in the entire circumference of the inner ring 63, but may be formed in the part where the molded products 120 are suctioned through the suctioning apertures 69, so that the molded products 120 adhere to the outer surface 61 of the first suctioning roll 60, namely, in the part from the position where the outer surface 61 of the first suctioning roll 60 contacts the outer surface 16 of the first pressing roll 10 to the position where the molded products 120 are released. The diameters of the suctioning apertures 69 are smaller than those of the molding concavities 12 of the first pressing roll 10, i.e., the molded products 120. Many suctioning apertures 69 are formed.

The inner ring 63 and the support shaft 66 of the first suctioning roll 60 are fixed, and so do not rotate. The outer ring 62 rotates to slide on the inner ring 63. A vacuum generator is connected to one of the two spaces 68, 68 in the inner ring 63, which space 68 is connected to the holes 65 for connection that are connected to the suctioning apertures 69 that suction the molded products 120. In the first suctioning roll 60, since no spaces 68 rotate, the switching device 42 that is connected to the first suctioning roll 50 (see Fig. 3) is not needed, to thereby simplify the configuration. However, since the outer ring 62 slides on the inner ring 63, the sliding surfaces must be flat and any abrasion caused by the sliding must be treated. The number and the arrangement of the suctioning apertures 69 and the holes 65 for connection are not limited as long as the molded products 120 in the molding concavities 12 of the first pressing roll 10 can be ripped off. The outer ring 62 and the inner ring 63 of the first suctioning roll 60 are made of metal, plastic, rubber, or ceramic. They are preferably made of metal or plastic, both of which have a high resistance to abrasion. They are not necessarily made of the same material as that of the first pressing roll 10. The material of the outer ring 62 may differ from that of the inner ring 63.

The space 68 in the inner ring 63 of the first suctioning roll 60 is caused to have a negative pressure so as to suction air through the suctioning apertures 69 of the outer surface 61. Namely, the space 68 at the negative pressure is connected to the suctioning apertures 69 through the holes 65 for connection. Incidentally, the space in the inner ring 63 may be divided into three or more spaces 68 so that the space 68 downstream of the position where the molded products 120 are released from the outer ring 62 is pressurized to eject air through the suctioning apertures 69 via the holes 65 for connection. If air is ejected through the suctioning apertures 69, any powder, any fine powder, etc., of the material 110 that has plugged the suctioning apertures 69, can be discharged. Thus, no cleaning of the suctioning apertures 69 is required.

By the pressure granulation machine 5, which does not form part of the present invention, since the second pressing roll 20 rotates at a speed at the outer surface that is faster than that of the first pressing roll 10, the material 130 that has not filled the molding concavities 12, i.e., to form the burrs, adheres to the outer surface 26 of the second pressing roll 20. Thus, the molded products 120, to which no burrs attach, are granulated by compression in the molding concavities 12 of the first pressing roll 10. The molded products 120, which have been granulated by compression in the molding concavities 12 of the first pressing roll 10, are suctioned by the first suctioning roll 60 to be ripped off the molding concavities 12. Thus, since no mechanism for extruding the products is needed, the molded products 120 can be reclaimed by a simple structure, no powdery material adheres to the interstices, and there is a high degree of cleanliness. Further, since in the first suctioning roll 50 only the outer ring 62 rotates, connection to the vacuum generator 40 (see Fig. 3) can be simplified.

Next, with reference to Fig. 8, the pressure granulation machine 6, which is a third embodiment of the present invention, is discussed. Fig. 8 is a schematic drawing of the pressure granulation machine 6. In the pressure granulation machine 6 the diameter D2 of the second pressing roll 21 is larger than the diameter D1 of the first pressing roll 10. Incidentally, in the pressure granulation machines 15, wherein the machines 2, 4 and 5 do not form part of the present invention, the diameter D1 of the first pressing roll 10 is the same as the diameter D2 of the second pressing roll 21. Thus, the second pressing roll 20 rotates faster than the first pressing roll 10 does so that the second pressing roll 20 rotates at a speed at the outer surface that is faster than that of the first pressing roll 10. In this way, by adjusting the speeds of rotation the pressing rolls 10, 20, which have the same diameter, can be used.

In the pressure granulation machine 6, since the diameter D2 of the second pressing roll 21 is larger than the diameter D1 of the first pressing roll 10, the first pressing roll 10 and the second pressing roll 21 may rotate at the same speed so that the second pressing roll 20 rotates at a speed at the outer surface that is faster than that of the first pressing roll 10. Thus, the burrs 130, which are the material that has not filled the molding concavities 12, adhere to the outer surface of the second pressing roll 21. Thus, the molded products 120, to which no burrs attach, are granulated by compression in the molding concavities 12 of the first pressing roll 10. By the pressure granulation machine 6 the driving system, which is complicated and costly, can be favorably simplified. Especially, when any existing machine is upgraded to be replaced by the machine of the present invention, no modification to the driving system is required. This is a great advantage. Incidentally, even in the pressure granulation machine 6 the speed of rotation of the first pressing roll 10 may differ from that of the second pressing roll 21.

In the pressure granulation machines 1 - 6, wherein machines 2, 4 and 5 do not form part of the present invention, each feature of them may be combined with another feature, the scope of the present invention still being defined by the appended claims. For example, in the pressure granulation machine 2, which does not form part of the present invention, as shown in Fig. 4 the diameter of the first pressing roll 10 may differ from that of the second pressing roll 20 in the pressure granulation machine 6 as shown in Fig. 8.

As discussed above, by the pressure granulation machine of the present invention no mechanism for extruding the products is needed. Thus, even if the number of concavities for molding increases, the parts will not increase. Thus the number of concavities for molding can be easily increased. When small molded products, such as ones 3 mm in diameter or less, are manufactured, this advantage is prominent.

Below, the main reference numerals and symbols that are used in the detailed description and drawing are listed.
- 1, 2, 3, 4, 5, 6: the pressure granulation machines
- 10: the first pressing roll
- 12: the molding concavities
- 14: the rotary shaft
- 16: the outer surface
- 20, 21: the second pressing roll
- 24: the rotary shaft
- 26: the outer surface
- 30: the second pressing roll
- 32: the molding concavities
- 34: the rotary shaft
- 36: the outer surface
- 40: the vacuum generator
- 42: the switching device
- 44: the vacuum piping
- 50, 60: the first suctioning roll (the first suctioning device)
- 51, 61: the outer surface
- 52, 62: the outer ring
- 54, 64: the parting plates
- 56: the rotary shaft
- 58, 68: the spaces
- 59, 69: the suctioning apertures
- 63: the inner ring
- 65: the holes for connection
- 66: the support shaft
- 70: the first port for suctioning (the first suctioning device)
- 71: the second port for suctioning (the second suctioning device)
- 72: the suction piping
- 74: the cyclone-type reclaiming device
- 76, 78: the suction piping
- 80: the scraper
- 90: the secondary roll
- 92: the scraper
- 100: the screw feeder
- 102: the screw
- 104: the case
- 110: the material
- 120, 122: the molded products
- 130: the material that adheres to the outer surface
- 150: the second suctioning roll (the second suctioning device)
- 151: the outer surface
- 159: the apertures for suctioning
- A: the section where the molded products are ripped off the molding concavities by suctioning through the suctioning apertures
- B: the section where the molded products are released by stopping suctioning through the suctioning apertures
- C: the section where air is ejected through the suctioning apertures
- D1: the diameter of the first pressing roll

## Claims

1. A pressure granulation machine for molded products that is configured to granulate material by compressing it by means of a pair of pressing rolls configured to rotate to manufacture molded products, comprising:
a first pressing roll (10) of the pair of the pressing rolls, on an outer surface (16) of which molding concavities (12) are formed; and
a second pressing roll (20; 30) of the pair of the pressing rolls that is configured to rotate at a speed at the outer surface (26) that is faster than that of the first pressing roll (10),
**characterized in that** the pressure granulation machine further comprises a first suctioning device (50) configured to suction the molded products that have been formed by granulating the material by pressing it in the molding concavities (12) to rip off the molded products from the molding concavities (12),
wherein the first suctioning device (50) is a first suctioning roll that contacts the outer surface (16) of the first pressing roll (10), wherein suctioning apertures (59) that are smaller than the molding concavities (12) are formed on an outer surface (51) of the first suctioning roll, which is configured to rotate, and which is configured to rip off the molded products from the molding concavities (12) by suctioning through the suctioning apertures (59),
wherein the outer surface (51) of the first suctioning roll, which is configured to rotate, has a section (A) configured to rip the molded products off the molding concavities (12) by suctioning through the suctioning apertures (59), and a section (B) configured to release the molded products by stopping suctioning through the suctioning apertures (59) , and wherein at least a position where the outer surface (51) contacts the first pressing roll (10) is configured to rip the molded products off the molding concavities (12) by suctioning through the suctioning apertures (59), and
wherein the first suctioning roll has an outer ring (52) that is a cylinder comprising the outer surface (51), wherein an inside of the outer ring (52) is divided into three spaces (58) in a normal section of an axis of the outer ring (52), wherein the three spaces (58) are connected to the suctioning apertures (59) and are configured to rotate together with the outer surface (51),
the pressure granulation machine for molded products further comprising:
a vacuum generator (40); and
a switching device (42) configured to switch in order to connect the vacuum generator (40) to the space (58) that is connected to the suctioning apertures (59) that are located at the section (A) to rip off the molded products from the molding concavities by suctioning through the suctioning apertures (59).

2. The pressure granulation machine for molded products of claim 1, wherein second molding concavities (32) are formed on an outer surface (36) of the second pressing roll (30), further comprising:
a second suctioning device (150) configured to suction molded products that have been formed by granulating the material by pressing it in the second molding concavities (32) to rip off the molded products from the second molding concavities (32).

3. The pressure granulation machine for molded products of claim 1, further comprising:
a scraper (80) configured to scrape off material that adheres to an outer surface (26) of the second pressing roll (20).

4. The pressure granulation machine for molded products of claim 2, further comprising:
a secondary roll (90) that contacts the outer surface of the second pressing roll (30) and is configured to rotate and to roll up material that adheres to the outer surface (36) of the second pressing roll (30); and
a scraper (92) configured to scrape off the material that adheres to an outer surface (91) of the secondary roll (90).

5. The pressure granulation machine for molded products of claim 2,
wherein the second suctioning device (150) is a second suctioning roll that contacts the outer surface (36) of the second pressing roll (30), wherein suctioning apertures (159) that are smaller than the second molding concavities (32) are formed on an outer surface (151) of the second suctioning roll (150), which is configured to rotate, and which is configured to rip off the molded products from the second molding concavities (32) by suctioning through the suctioning apertures (159).

6. The pressure granulation machine for molded products of claim 1,
wherein a surface of the first suctioning roll is made of metal, plastic, rubber, or ceramic.

7. The pressure granulation machine for molded products of claim 1,
wherein the outer surface (51) of the first suctioning roll, which is configured to rotate, has a section (C) configured to eject air through the suctioning apertures (59) so as to discharge at the section fine powder that has plugged the suctioning apertures (59).

8. The pressure granulation machine for molded products of any of claims 1 to 4,
wherein a diameter (D1) of the first pressing roll (10) and a diameter (D2) of the second pressing roll (20) are the same and a speed of rotation of the second pressing roll (20) is configured to be greater than that of the first pressing roll (10), or
wherein a diameter (D2) of the second pressing roll (20) is greater than a diameter (D1) of the first pressing roll (10), and the speeds of rotation of the first pressing roll (10) and the second pressing roll (20) are configured to be the same.

## Patentansprüche

1. Druckgranuliermaschine für Formprodukte, die dazu ausgeführt ist, Material zu granulieren durch Zusammenpressen desselben mittels eines Paars von Druckrollen, die dazu konfiguriert sind, sich zu drehen, um Formprodukte herzustellen, mit:
einer ersten Druckrolle (10) des Paars von Druckrollen, wobei auf einer Außenfläche (16) derselben Formhöhlungen (12) ausgebildet sind, und
einer zweiten Druckrolle (20; 30) des Paars von Druckrollen, die dazu konfiguriert ist, sich mit einer Geschwindigkeit an der Außenfläche (26) zu drehen, die schneller ist als die der ersten Druckrolle (10),
**dadurch gekennzeichnet, dass** die Druckgranuliermaschine ferner eine erste Saugvorrichtung (50) aufweist, die dazu eingerichtet ist, die Formprodukte anzusaugen, die durch Granulieren des Materials durch Zusammenpressen desselben in den Formhöhlungen (12) gebildet worden sind, um die Formprodukte aus den Formhöhlungen (12) herauszureißen,
wobei die erste Saugvorrichtung (50) eine erste Saugwalze ist, die die Außenfläche (16) der ersten Druckrolle (10) berührt, wobei Ansaugöffnungen (59), die kleiner als die Formhöhlungen (12) sind, auf einer Außenfläche (51) der ersten Saugwalze ausgebildet sind, die zum Drehen ausgeführt ist und die dazu eingerichtet ist, die Formprodukte durch Saugen durch die Ansaugöffnungen (59) aus den Formhöhlungen (12) herauszureißen,
wobei die Außenfläche (51) der zum Drehen ausgeführten, ersten Saugwalze einen Abschnitt (A), der dazu eingerichtet ist, die Formprodukte durch Saugen durch die Ansaugöffnungen (59) aus den Formhöhlungen (12) herauszureißen, und einen Abschnitt (B) hat, der dazu eingerichtet ist, die Formprodukte freizugeben durch Stoppen des Saugens durch die Ansaugöffnungen (59), und wobei zumindest eine Position, an der die Außenfläche (51) die erste Druckrolle (10) berührt, dazu eingerichtet ist, die Formprodukte durch Saugen durch die Ansaugöffnungen (59) aus den Formhöhlungen (12) herauszureißen, und
wobei die erste Saugwalze einen Außenring (52) aufweist, der ein die Außenfläche (51) umfassender Zylinder ist, wobei ein Inneres des Außenrings (52) in einem Querschnitt einer Achse des Außenrings (52) in drei Räume unterteilt ist, wobei die drei Räume (58) mit den Ansaugöffnungen (59) verbunden und dazu eingerichtet sind, zusammen mit der Außenfläche (51) zu rotieren,
wobei die Druckgranuliermaschine für Formprodukte ferner aufweist:
einen Unterdruckerzeuger (40), und
eine Schaltvorrichtung (42), die zum Umschalten eingerichtet ist, um den Unterdruckerzeuger (40) mit dem Raum (58) zu verbinden, der mit den Ansaugöffnungen (59) verbunden ist, die sich in dem Abschnitt (A) befinden, um die Formprodukte durch Saugen durch die Ansaugöffnungen (59) aus den Formhöhlungen herauszureißen.

2. Druckgranuliermaschine für Formprodukte nach Anspruch 1, bei der zweite Formhöhlungen (32) auf einer Außenfläche (36) der zweiten Druckrolle (30) ausgebildet sind, und ferner mit:
einer zweiten Saugvorrichtung (150), die dazu ausgeführt ist, Formprodukte anzusaugen, die durch Granulieren des Materials durch Zusammenpressen desselben in den zweiten Formhöhlungen (32) gebildet worden sind, um die Formprodukte aus den zweiten Formhöhlungen (32) herauszureißen.

3. Druckgranuliermaschine für Formprodukte nach Anspruch 1, ferner aufweisend:
einen Schaber (80), der dazu eingerichtet ist, Material abzustreifen, das an einer Außenfläche (26) der zweiten Druckrolle (20) anhaftet.

4. Druckgranuliermaschine für Formprodukte nach Anspruch 2, ferner aufweisend:
eine Hilfswalze (90), die die Außenfläche der zweiten Druckrolle (30) berührt und dazu ausgeführt ist, sich zu drehen und Material aufzurollen, das an der Außenfläche (36) der zweiten Druckrolle (30) anhaftet, und
einen Schaber (92), der dazu eingerichtet ist, das Material abzustreifen, das an einer Außenfläche (91) der Hilfswalze (90) anhaftet.

5. Druckgranuliermaschine für Formprodukte nach Anspruch 2, bei der die zweite Saugvorrichtung (150) eine zweite Saugwalze ist, die die Außenfläche (36) der zweiten Druckrolle (30) berührt, wobei Ansaugöffnungen (159), die kleiner als die zweiten Formhöhlungen (32) sind, auf einer Außenfläche (151) der zweiten Saugwalze (150) ausgebildet sind, die zum Drehen ausgeführt ist und die dazu eingerichtet ist, die Formprodukte durch Saugen durch die Ansaugöffnungen (159) aus den zweiten Formhöhlungen (32) herauszureißen.

6. Druckgranuliermaschine für Formprodukte nach Anspruch 1, bei der eine Oberfläche der ersten Druckrolle aus Metall, Kunststoff, Gummi oder Keramik besteht.

7. Druckgranuliermaschine für Formprodukte nach Anspruch 1, bei der die Außenfläche (51) der zum Drehen ausgeführten ersten Druckrolle einen Abschnitt (C) hat, der dazu eingerichtet ist, Luft durch die Ansaugöffnungen (59) auszustoßen, um in dem Abschnitt feines Pulver auszutragen, welches die Ansaugöffnungen (59) verstopft hat.

8. Druckgranuliermaschine für Formprodukte nach einem der Ansprüche 1 bis 4,
bei der ein Durchmesser (D1) der ersten Druckrolle (10) und ein Durchmesser (D2) der zweiten Druckrolle (20) gleich sind und eine Drehgeschwindigkeit der zweiten Druckrolle (20) dazu konfiguriert ist, größer zu sein als die der ersten Druckrolle (10), oder
bei der ein Durchmesser (D2) der zweiten Druckrolle (20) größer ist als ein Durchmesser (D1) der ersten Druckrolle (10) und die Drehgeschwindigkeiten der ersten Druckrolle (10) und der zweiten Druckrolle (20) dazu konfiguriert sind, gleich zu sein.

## Revendications

1. Machine de granulation sous pression pour produits moulés qui est conçue pour former des granulés d'un matériau en le comprimant au moyen d'une paire de rouleaux de pression conçus pour tourner afin de fabriquer des produits moulés, comprenant:
un premier rouleau de pression (10) de la paire des rouleaux de pression, dont une face extérieure (16) comporte des cavités de moulage (12); et
un second rouleau de pression (20, 30) de la paire des rouleaux de pression qui est conçu pour tourner à une vitesse au niveau de la seconde face (26) qui est supérieure à celle du premier rouleau de pression (10),
**caractérisée en ce que** la machine de granulation sous pression comprend en outre un premier dispositif aspirant (50) conçu pour aspirer les produits moulés qui ont été formés par granulation du matériau en le pressant dans les cavités de moulage (12) afin d'arracher les produits moulés des cavités de moulage (12),
dans laquelle le premier dispositif aspirant (50) est un premier rouleau aspirant qui entre en contact avec la face extérieure (16) du premier rouleau de pression (10), des ouvertures aspirantes (59) qui sont plus petites que les cavités de moulage (12) étant formées sur une face extérieure (51) du premier rouleau aspirant, qui est conçu pour tourner, et qui est conçu pour arracher les produits moulés des cavités de moulage (12) par aspiration dans les ouvertures aspirantes (59),
dans laquelle la face extérieure (51) du premier rouleau aspirant, qui est conçue pour tourner, a une section (A) conçue pour arracher les produits moulés des cavités de moulage (12) par aspiration à travers les ouvertures aspirantes (59), et une section (B) conçue pour libérer les produits moulés en arrêtant l'aspiration à travers les ouvertures aspirantes (59), et dans lequel au moins une position dans laquelle la face extérieure (51) entre en contact avec le premier rouleau de pression (10) est conçue pour arracher les produits moulés des cavités de moulage (12) par aspiration dans les ouvertures aspirantes (59), et
dans laquelle le premier rouleau aspirant comprend une bague extérieure (52) qui est un cylindre comprenant la face extérieure (51), un intérieur de la bague extérieure (52) étant divisé en trois espaces (58) dans une section normale d'un axe de la bague extérieure (52), les trois espaces (58) étant reliés aux ouvertures aspirantes (59) et étant conçus pour tourner ensemble avec la face extérieure (51)
la machine de granulation sous pression pour produits moulés comprenant en outre:
un générateur de vide (40); et
un dispositif de commutation (42) conçu pour commuter afin de connecter le générateur de vide (40) à l'espace (58) qui est connecté aux ouvertures aspirantes (59) qui sont situées au niveau de la section (A) pour arracher les produits moulés des cavités de moulage par aspiration dans les ouvertures aspirantes (59).

2. Machine de granulation sous pression pour produits moulés selon la revendication 1, dans laquelle des secondes cavités de moulage (32) sont formées sur une face extérieure (36) du second rouleau de pression (30), comprenant en outre:
un second dispositif aspirant (150) conçu pour aspirer les produits moulés qui ont été formés par granulation du matériau en le pressant dans les cavités de moulage (32) afin d'arracher les produits moulés des secondes cavités de moulage (32).

3. Machine de granulation sous pression pour produits moulés selon la revendication 1, comprenant en outre:
un racloir (80) conçu pour enlever en raclant le matériau qui adhère à une face extérieure (26) du second rouleau de pression (20).

4. Machine de granulation sous pression pour produits moulés selon la revendication 2, comprenant en outre:
un rouleau secondaire (90) qui entre en contact avec la face extérieure du second rouleau de pression (30) et est conçu pour tourner et pour enrouler le matériau qui adhère à la face extérieure (36) du second rouleau de pression (30); et
un racloir (92) conçu pour enlever en raclant le matériau qui adhère à une face extérieure (91) du rouleau secondaire (90).

5. Machine de granulation sous pression pour produits moulés selon la revendication 2, dans laquelle le second dispositif aspirant (150) est un second rouleau aspirant qui entre en contact avec la face extérieure (36) du second rouleau de pression (30), les ouvertures aspirantes (159) qui sont plus petites que les secondes cavités de moulage (32) étant formées sur une face extérieure (151) du second rouleau aspirant (150), qui est conçu pour tourner, et qui est conçu pour arracher les produits moulés des secondes cavités de moulage (32) par aspiration dans les ouvertures aspirantes (159).

6. Machine de granulation sous pression pour produits moulés selon la revendication 1, dans laquelle une face du premier rouleau aspirant est fabriquée en métal, en plastique, en caoutchouc ou en céramique.

7. Machine de granulation sous pression pour produits moulés selon la revendication 1, dans laquelle la face extérieure (51) du premier rouleau aspirant, qui est conçu pour tourner, présente une section (C) conçue pour éjecter de l'air à travers les ouvertures aspirantes (59) de manière à évacuer au niveau de la section de la poudre fine qui a obstrué les ouvertures aspirantes (59).

8. Machine de granulation sous pression pour produits moulés selon l'une quelconque des revendications 1 à 4, dans laquelle un diamètre (D1) du premier rouleau de pression (10) et un diamètre (D2) du second rouleau de pression (20) sont identiques et une vitesse de rotation du second rouleau de pression (20) est conçue pour être supérieure à celle du premier rouleau de pression (10), ou
dans laquelle un diamètre (D2) du second rouleau de pression (20) est supérieur à un diamètre (D1) du premier rouleau de pression (10), et les vitesses de rotation du premier rouleau de pression (10) et du second rouleau de pression (20) sont conçues pour être identiques.
